# EUROPEAN PATENT APPLICATION

(11) **EP 4 779 187 A1**
(43) Date of publication of application: **22.07.2026**
(21) Application number: 25205774.0
(22) Date of filing: 30.09.2025
(51) Int. Cl.: F16L 5/04, F16L 55/11, A62C 2/06, H02G 3/08, H02G 3/22

(54) **INSERT AND PLUG**

(30) Priority: 15.01.2025 GB 202500545
(71) Applicant: Mark and Simon Ltd, Sidcup Kent DA15 7HN (GB)
(72) Inventor: DIXON, Mark, Sidcup, DA15 7HN (GB); DIXON, Simon, Sidcup, DA15 7HN (GB)
(74) Representative: Page White Farrer

(57) **Abstract**

A plug (2) comprising:
a ring (10); and
an insert (12) inserted within the ring, wherein the insert comprises a head, a body and an opening for passing a cable or a pipe through the head and the body, wherein the insert is made entirely of intumescent material.

## Description

### Field of the disclosure

The invention relates to an insert (e.g., for passing a cable or a pipe through a hole within a fire-resistant wall, floor or ceiling of a building) and a plug comprising such insert.

### Background

Existing buildings may comprise fire-resistant walls, floors or ceilings. Such fire-resistant walls, floors or ceilings may prevent the spread of a fire to or from another part of the same building. Alternatively, fire-resistant walls, floors or ceilings may prevent the spread of the fire to or from an adjoining building. Fire-resistant walls, floors or ceilings may provide between 30 and 240 minutes of protection.

In practice, holes may be made through fire-resistant walls, floors or ceilings to pass cables or pipes. Mastic may be applied around the cables or pipes to seal the holes. The mastic may be made of intumescent material. When exposed to heat (e.g. from a fire), the cables or pipes may melt but the mastic may expand to ensure that the holes remain sealed and the walls, floors or ceilings remain fire-resistant.

A shortcoming with the above is that the mastic is applied manually by operators. This makes it difficult to ensure that an accurate, consistent and repeatable amount of intumescent material is used.

Another shortcoming is that the mastic may have the same visual appearance as other types of mastics that are not made of intumescent material (e.g., mastic made of silicon). This makes it difficult to control whether the mastic used is fit for purpose.

Another shortcoming is that it does not provide any restriction as to the distance between the cables or pipes. This makes it difficult to ensure that the distance between the cables or pipes is greater than a minimum distance.

As a result, existing buildings may not always comply with fire safety regulations.

One or more aspects of this disclosure address the above shortcomings.

### Summary

According to an aspect, there is provided an insert comprising a head, a body and an opening for passing a cable or a pipe through the head and the body, wherein the insert is made entirely of intumescent material.

The intumescent material may comprise at least one of expandable graphene, sodium silicate or mono ammonium phosphate.

The intumescent material may be configured to expand by at least 100% when exposed to a temperature above a threshold temperature.

The threshold temperature may be at least 150 degrees Celsius when the intumescent material comprises expandable graphene.

The body of the insert may be tubular.

The head of the insert may be annular.

An inner diameter of the head of the insert may be equal to an outer diameter of the body of the insert.

An outer diameter of the head of the insert may be greater than an outer diameter of the body of the insert.

According to an aspect, there is provided a plug comprising: a plug comprising: a ring; and an insert as defined above inserted within the ring.

The ring may be made at least partially of fire-resistant material.

The ring may be made entirely of fire-resistant material.

The fire-resistant material may be configured to maintain a physical integrity when exposed to a fire for a predetermined duration.

The predetermined duration may be comprised between 30 and 120 minutes or between 30 and 240 minutes.

The fire-resistant material may comprise plasterboard, brick, metal, graphene, glass, cement or fire-retardant wood.

An outer diameter of the head of the insert may be smaller than or equal to an outer diameter of the ring.

An outer diameter of the body of the insert may be smaller than or equal to an inner diameter of the ring.

The ring and the insert may be fastened to each other.

The ring and the insert may be fastened to each other with screws.

According to an aspect, there is provided a building comprising: a wall, floor or ceiling including a hole; a insert or a plug as defined above fitted into the hole; and a cable or a pipe passing through the insert or the plug.

In the above, many different aspects have been described. It should be appreciated that further aspects may be provided by the combination of any two or more of the aspects described above.

Various other aspects are also described in the following detailed description and in the attached claims.

### Brief Description of the Figures

Embodiments will now be described, by way of example only, with reference to the accompanying Figures in which:
Fig. 1 shows a side view of an example of a plug for passing a cable or a pipe through a hole within a wall, floor or ceiling of a building;
Fig. 2 shows a bottom view of the plug;
Fig. 3 shows a cross section view of the plug;
Fig. 4 shows a cross section view of the plug fitted into the hole;
Fig. 5 shows a side view of an insert;
Fig. 6 shows a bottom view of the insert;
Fig. 7 shows a cross section view of the insert; and
Fig. 8 shows a perspective view of the insert.

### Detailed Description of the Figures

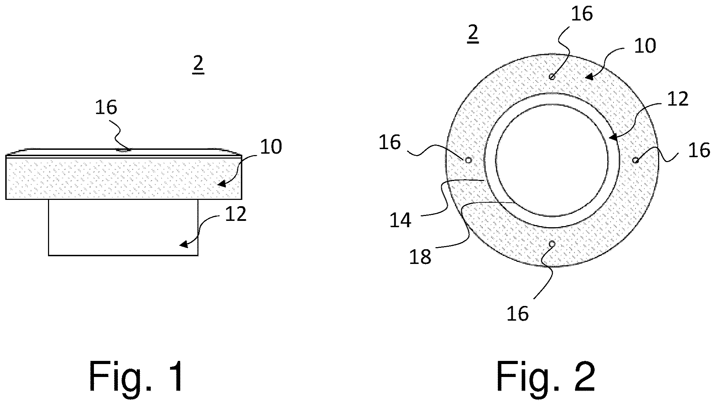

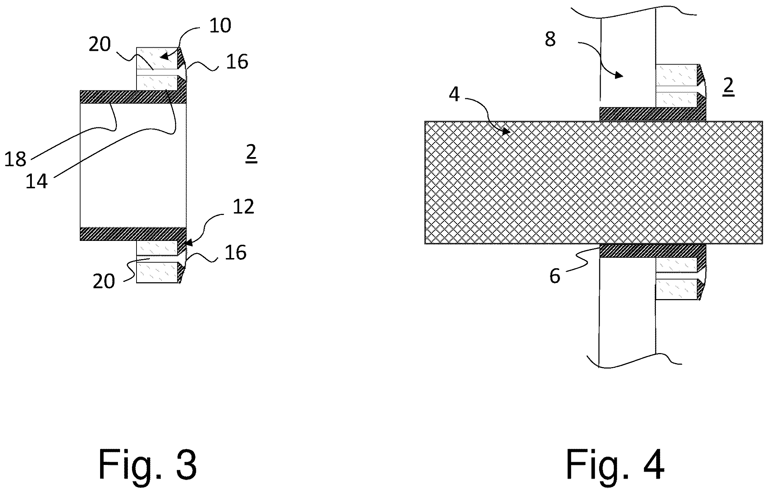

Fig. 1 to Fig. 4 show an example of a plug 2 for passing a cable or a pipe 4 through a hole 6 within a wall, floor or ceiling 8 of a building. The wall, floor or ceiling 8 may be made at least partially of fire-resistant material. The wall, floor or ceiling 8 may be made entirely of fire-resistant material. The wall, floor or ceiling 8 may be configured to prevent the spread of a fire to or from another part of the same building. Alternatively, the wall, floor or ceiling 8 may be configured to prevent the spread of the fire to or from an adjoining building.

The plug 2 may comprise a ring 10 and an insert 12 inserted within the ring 10.

It will be understood that the insert 12 is not always used in combination with the ring 10. Alternatively, the insert 12 may be used without the ring 10 (e.g., when the depth the wall, floor or ceiling 8 matches or exceeds the length of the insert 12).

It will be understood that the insert 12 is already solid before being inserted within the ring 10 and/or before being fitted within the hole 6 (unlike mastic which would viscous before being applied within the hole 6 and only gets solid after a drying time).

The ring 10 may be made at least partially of fire-resistant material. Here, the ring 10 may be made entirely of fire-resistant material.

A fire-resistant material may comprise plasterboard, brick, metal, graphene, glass, cement or fire-retardant wood.

In this disclosure, the adjective "fire-resistant" may refer to a capacity to maintain a physical integrity when exposed to a fire for a predetermined duration. The predetermined duration may be between 30 and 120 minutes and preferably between 30 and 240 minutes of protection.

The ring 10 may comprise a central opening 14 for inserting the insert 12.

The ring 10 may take any shape. A cross section of the ring 10 may be circular, rectangular, triangular, square or take another shape. Here, a cross section of the ring 10 may be circular. A cross section of the ring 10 may comprise an inner diameter. A cross section of the ring 10 may comprise an outer diameter.

The ring 10 may comprise a plurality of side openings 16. Here, the plurality of side openings 16 may comprise four side openings 16. The plurality of side openings 16 may be diametrically opposed in relation to the central opening 14.

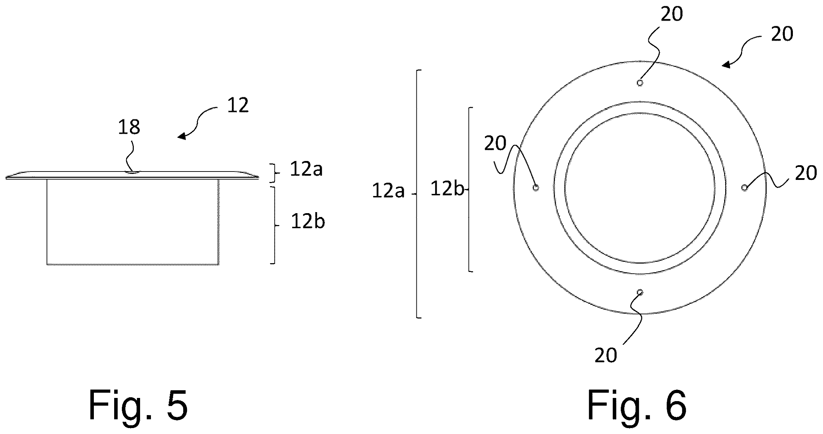

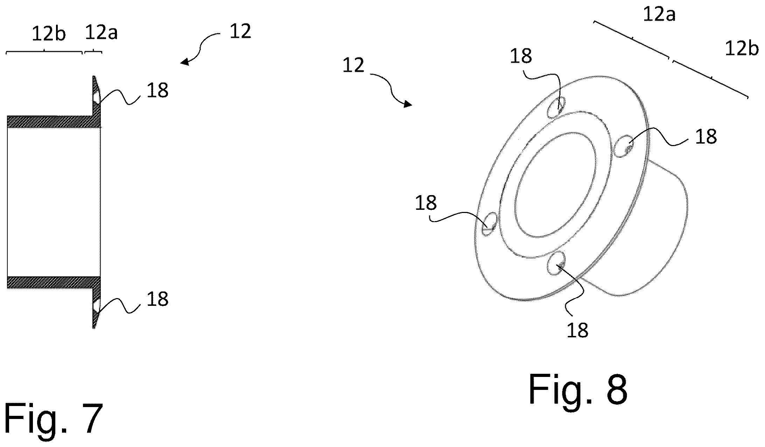

The insert 12 (better illustrated in Fig. 5 to Fig. 8) may comprise a head 12a and a body 12b. The insert 12 may comprise a central opening 18 for passing the cable or the pipe through the head 12a and the body 12b.

The insert 12 may be made entirely of intumescent material. The insert 12 may be moulded. The intumescent material may comprise at least one of expandable graphene, sodium silicate or mono ammonium phosphate.

In this disclosure, the terms "graphene" and "graphite" may be used interchangeably.

In this disclosure, the adjective "intumescent" may refer to a capacity to expand when exposed to a temperature above a threshold temperature. The threshold temperature may be at least 150 degrees Celsius or Centigrade when the intumescent material comprises graphene. The expansion may be by at least 100%.

The insert 12 may take any shape. The head 12a of the insert 12 may be annular. A cross section of the head 12a of the insert 12 may be circular, rectangular, triangular, square or take another shape. Here, a cross section of the head 12a of the insert 12 may be circular. A cross section of the head 12a of the insert 12 may comprise an inner diameter. A cross section of the head 12a of the insert 12 may comprise an outer diameter.

The head 12a of the insert 12 may comprise a plurality of side openings 20. Here, the plurality of side openings 20 may comprise four side openings 20. The plurality of side openings 20 may be diametrically opposed in relation to the central opening 18. The plurality of side openings 20 may be tapered.

The body 12b of the insert 12 is tubular. A cross section of the body 12b of the insert 12 may be circular, rectangular, triangular, square or take another shape. Here, a cross section of the body 12b of the insert 12 may be circular. A cross section of the body 12b of the insert 12 may comprise an inner diameter. A cross section of the body 12b of the insert 12 may comprise an outer diameter.

The body 12b of the insert 12 may or may not comprise an outer thread. Here, the body 12b of the insert 12 may not comprise an outer thread.

An outer diameter of the head 12a of the insert 12 may be smaller than or equal to an outer diameter of the ring 10. An outer diameter of the head 12a of the insert 12 may be greater than an outer diameter of the body 12b of the insert 12. An inner diameter of the head 12a of the insert 12 may be equal to an outer diameter of the body 12b of the insert 12.

An outer diameter of the body 12b of the insert 12 may be smaller than or equal to a diameter of the hole 6. An outer diameter of the body 12b of the insert 12 may be smaller than or equal to an inner diameter of the ring 10. An inner diameter of the body 12b of the insert 12 may be equal to or greater than a diameter of the cable or the pipe 4.

In operation, the plug 2 may initially be unplugged from the hole 6. The cable or the pipe may be passed through the plug 2 and through the hole 6. The plug 2 may be fitted within the hole 6. The ring 10 may rest against the wall, floor or ceiling 8. The insert 12 may extend partially inside the wall, floor or ceiling 8 and partially outside the wall, floor or ceiling 8. More specifically, the head 12a of the insert may rest against the ring 10 or wall, floor or ceiling 8. The body 12b of the insert 12 may extend inside the ring 10 and/or the wall, floor or ceiling 8.

It will be understood that, when the body 12b of the insert 12 does not comprise an outer thread, the hole 6 may not comprise an inner thread. The plug 2 may be fitted into the hole 6.

It will be understood that, when the body 12b of the insert 12 comprises an outer thread, the hole 6 may comprise an inner thread. The plug 2 may be plugged and screwed into the hole 6.

The plug 2 may be fastened to the wall, floor or ceiling 8. The fastening may take any form. The fastening may comprise screwing, stapling, gluing or take another form. Here, the fastening may comprise screwing.

A plurality of screws (not represented) may extend through the plurality of side openings 16, through the plurality of side openings 20 and through the wall, floor or ceiling 8. The number of screws may be smaller than or equal to the number of side openings 16 and the number of side openings 20. Here, the number screws may be equal to two. The screws may be diametrically opposite in relation to the central opening 14 and the central opening 18.

The plug 2 may be provide various advantages compared to existing solutions.

When exposed to a fire, the insert 12 may expand in all directions. The ring 10 may however direct the expansion of the insert 12 inwardly (i.e., toward the hole 6) so that the insert 12 fills the hole 6. In this way, the plug 2 may ensure that the wall, floor or ceiling 8 remain fire-resistant.

The insert 12 may comprise a predetermined amount of intumescent material. This ensures that an accurate and repeatable amount of intumescent material is used.

The insert 12 may comprise a reference (printed or etched) indicating that the insert 12 is made partially or entirely of intumescent material. This allows to control that intumescent material is used. The reference may indicate the diameter of the insert 12. This allows the operator to drill a hole with a diameter matching the diameter of the insert (to ensure correct installation). The reference may indicate a brand.

The ring 10 may maintain a minimum distance between adjacent plugs 2. This ensures that that adjacent cables or pipes are distant enough.

The foregoing description has provided a full and informative description of an example of a plug and an insert. However, various modifications and adaptations may become apparent to those skilled in the relevant arts in view of the foregoing description, when read in conjunction with the accompanying drawings and the appended claims. All such modifications and adaptations may still fall within the scope of the appended claims.

## Claims

1. A plug comprising:
a ring; and
an insert inserted within the ring, wherein the insert comprises a head, a body and an opening for passing a cable or a pipe through the head and the body, wherein the insert is made entirely of intumescent material.

2. The plug of claim 1, wherein the ring is made at least partially of fire-resistant material.

3. The plug of claim 2, wherein the ring is made entirely of fire-resistant material.

4. The plug of claim 2 or claim 3, wherein the fire-resistant material is configured to maintain a physical integrity when exposed to a fire for a predetermined duration.

5. The plug of claim 4, wherein the predetermined duration is comprised between 30 and 120 minutes or between 30 and 240 minutes.

6. The plug of any of claims 1 to 5, wherein the fire-resistant material comprises plasterboard, brick, metal, graphene, glass, cement or fire-retardant wood.

7. The plug of any of claims 1 to 6, wherein an outer diameter of the head of the insert is smaller than or equal to an outer diameter of the ring.

8. The plug of any of claims 1 to 7, wherein an outer diameter of the body of the insert is smaller than or equal to an inner diameter of the ring.

9. The plug of any of claims 1 to 8, wherein the ring and the insert are fastened to each other.

10. The plug of any of claims 1 to 9, wherein the intumescent material comprises at least one of expandable graphene, sodium silicate or mono ammonium phosphate.

11. The plug of any of claims 1 to 10, wherein the intumescent material is configured to expand by at least 100% when exposed to a temperature above a threshold temperature.

12. The plug of claim 11, wherein the threshold temperature is at least 150 degrees Celsius when the intumescent material comprises expandable graphene.

13. The plug of any of claims 1 to 12, wherein the body of the insert is tubular; and/or
wherein the head of the insert is annular.

14. The plug of claim 12 and claim 13, wherein an inner diameter of the head of the insert is equal to an outer diameter of the body of the insert; and/or
wherein an outer diameter of the head of the insert is greater than an outer diameter of the body of the insert.

15. A building comprising:
a wall, floor or ceiling including a hole;
a plug according to any of claims 1 to 14 fitted into the hole; and
a cable or a pipe passing through the insert or the plug.
